Europäisches Patentamt

European Patent Office

Office européen des brevets

(11) Veröffentlichungsnummer: **0 244 581 B1**

# (12) EUROPÄISCHE PATENTSCHRIFT

(45) Veröffentlichungstag der Patentschrift: 24.04.91

(21) Anmeldenummer: 87102709.0

(22) Anmeldetag: 26.02.87

(51) Int. Cl.⁵: **B60R 21/13**, G01P 15/12, G01C 9/16

(54) **Sensor zur selbsttätigen Auslösung von Insassenschutzvorrichtungen.**

(30) Priorität: 04.04.86 DE 3611360

(43) Veröffentlichungstag der Anmeldung:
11.11.87 Patentblatt 87/46

(45) Bekanntmachung des Hinweises auf die
Patenterteilung:
24.04.91 Patentblatt 91/17

(84) Benannte Vertragsstaaten:
DE FR GB IT

(56) Entgegenhaltungen:
EP-A- 0 140 334
WO-A-85/01217
FR-A- 2 561 389
GB-A- 2 130 373
US-A- 3 001 407

IEEE TRANSACTIONS ON ELECTRON DEVI-
CES, Band ED-26, Nr. 12, Dezember 1979,
Seiten 1911-1917, IEEE, New York, US; L.M.
ROYLANCE et al.: "A batch-fabricated silicon
accelerometer"

(73) Patentinhaber: ROBERT BOSCH GMBH
Postfach 50
W-7000 Stuttgart 1(DE)

(72) Erfinder: Zabler, Erich, Dr.Dipl.-Ing.
Brunhildstrasse 11
W-7513 Stutensee 1(DE)

**Beschreibung**

Stand der Technik

Die Erfindung geht aus von einem Sensor zur selbsttätigen Auslösung von Insassenschutzvorrichtungen nach der Gattung des Hauptanspruchs. Es ist bekannt, zur Bestimmung des Kippwinkels von Fahrzeugen für jede Kippachse einen eigenen Sensor einzubauen. Dadurch ist der Herstellungsaufwand aber groß und die gesamte Auslösevorrichtung baut sehr voluminös.

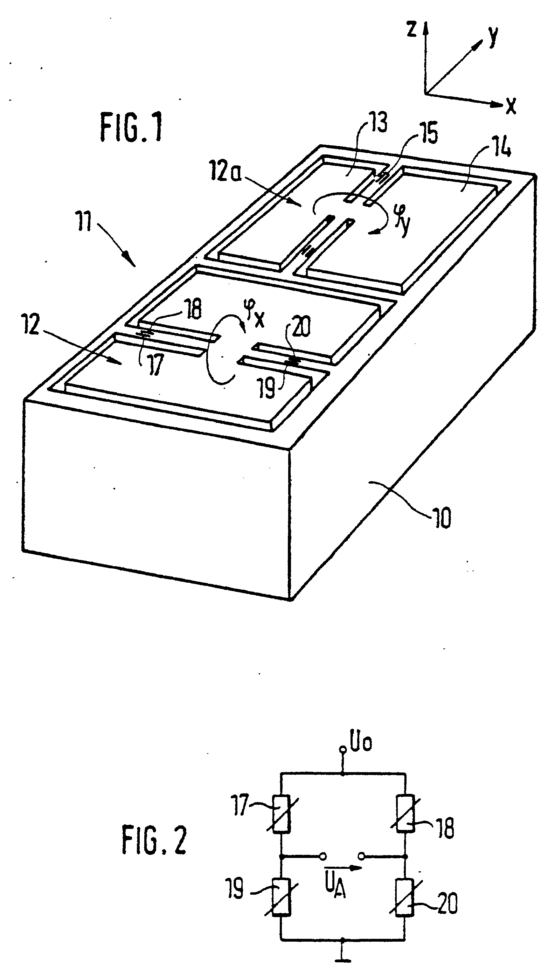

Aus der DE-A 35 09 948 ist ein Sensor bekannt, bei dem entsprechend der Ausbildung nach der Figur 1 zwei Trägheitselemente 30 bzw. 32 ineinander verschachtelt sind. Da das Element 30 im Element 32 angeordnet ist, ist eine gegenseitige Beeinflussung des Meßsignals bei einer Drehbewegung um die y- bzw. x-Achse gegeben. Der Sensor ermittelt das Meßsignal kapazitiv. Ferner besteht der Sensor aus mehreren Schichten, so daß ein abweichendes Herstellungsverfahren angewendet wird.

Der Sensor nach der EP-A-0 140 334 besteht aus kristallinem Silizium, aus dem ein einseitig befestigtes Pendel herausgeätzt ist. Der Sensor hat keine Torsionsstäbe sondern Biegestäbe, und es ist nur eine Messung in einer Richtung möglich.

Vorteile der Erfindung

Der erfindungsgemäße Sensor mit den kennzeichnenden Merkmalen des Hauptanspruchs hat demgegenüber den Vorteil, daß er eine extrem kleine Bauform aufweist. Die beiden Sensoren für die beiden unterschiedlichen Kippachsen sind in einem einzigen Gehäuse zusammengebaut. Durch die Verwendung eines Siliziumkristalls können aus der IC-Fertigung bekannte Verfahren in Verbindung mit anisotroper Ätztechnik angewendet werden. Dadurch it die Herstellung besonders preisgünstig. Durch die monolithische Bauform des Si-Kristalls hat der Sensor eine hohe Zuverlässigkeit. Ferner ist es besonders einfach eine tiefe Lage der Resonanzfrequenz des Pendels zu erzeugen, so daß der Sensor nur auf Winkellagenänderungen anspricht. Eine Überlagerung des Meßsignals bei noch tieferen Resonanzfrequenzen durch die translatorische Beschleunigung ist erwünscht. Somit ist es bei Kurvenfahrten ohne Steilwand möglich, daß der Sensor bereits bei einem kleineren Kippwinkel auslöst. Er berücksichtigt dabei bereits den durch die translatorische Beschleunigung (bei Kurvenfahrten die auf das Fahrzeug wirkende Fliehkraft) bewirkten Anteil, indem er den Winkel zum sogenannten Scheinlot mißt.

Durch die in den Unteransprüchen aufgeführten Maßnahmen sind vorteilhafte Weiterbildungen des im Hauptanspruch angegebenen Sensors möglich.

Zeichnung

Ein Ausführungsbeispiel der Erfindung ist in der Zeichnung dargestellt und in der nachfolgenden Beschreibung näher erläutert. Es zeigen Figur 1 eine perspektivische Darstellung eines Sensors und Figur 2 einen Schaltplan der auf den Torsionsstäben angeordneten Widerständen.

Beschreibung des Ausführungsbeispiels

In Figur 1 ist mit 10 ein Silizium-Plättchen bezeichnet, das das Gehäuse eines Sensors 11 bildet. In seiner Oberfläche sind in x- und y-Richtung jeweils ein gleich ausgebildetes Pendel 12, 12a des Sensors 11 eingeätzt. Dabei kann sowohl die anisotrope als auch die selektive Ätztechnik verwendet werden. Ferner ist es auch möglich, sonstige aus der IC-Fertigung herkömmlich bekannten Fertigungsverfahren zu verwenden. In der Zeichnung ist der Sensor 11 stark vergrößert dargestellt; die Pendel 12, 12a sind in mikromechanischen Abmessungen hergestellt und gleich ausgebildet. Die beiden Pendel 12, 12a weisen zwei Drehmassen 13, 14 auf, die an einem dünnen Torsionssteg 15 elastisch aufgehängt sind. Ferner ist die Gesamtdrehmasse des Pendels relativ groß gegenüber dem Torsionssteg 15, so daß eine sehr tiefe Lage der Resonanzfrequenz erzeugt wird. Der Torsionssteg 15 ist besonders dünn ausgebildet, um nur eine geringe Rückstellkraft zu erzeugen. In bekannter Weise sind die Torsionsstege 15 parallel zur jeweiligen Kippachse angeordnet; in der Figur 1 ist dazu der Kippwinkel mit $\phi_x$ bzw. $\phi_y$ bezeichnet. Eine von der Schwerkraft abhängige Vorzugslage des Pendels 12 erhält man durch eine leicht asymmetrische Ausbildung des Pendels 12, d.h. der beiden Drehmassen 13, 14. Dazu können die Drehmassen 13, 14 geringfügig unterschiedlich groß - in Figur 1 übertrieben gezeichnet - ausgebildet sein. Ferner sind auch Zusatzmassen verwendbar, z.B. eine Beschichtung der Oberflächen der Drehmassen 13 bzw. 14.

Auf den Torsionsstegen 15 sind jeweils - wie in Figur 2 näher dargestellt - vier Widerstände 17 bis 20 angeordnet. Die Widerstände 17 bis 20 sind in Form einer Wheatstone-Brücke geschaltet, wobei über den Diagonalzweig das Meßsignal abgegriffen wird. Die Widerstände 17 bis 20 können auf den Torsionsstegen 15 eindiffundiert sein oder in Dünn- bzw. Dickschichttechnik in Form von Dehnmeßstreifen aufgebracht sein. Auch ein kapazitiver Abgriff des Meßsignals ist denkbar. In allen Fällen ist aber darauf zu achten, daß der Abgriff des Meßsignals von überlagerten Störbeschleunigungen in z-Richtung unabhängig ist. Es soll jeweils nur die Torsion in x- bzw. y-Richtung bestimmt werden.

Es wäre auch denkbar, gleichzeitig die Auswerteschaltung für den Sensor mit auf dem entsprechend vergrößerten Silizium-Plättchen 10, außerhalb der Sensorgeometrie anzuordnen. Dadurch kann die weitere Signalauswertung vereinfacht werden. Das Meßsignal ist ohne Übertragungsverluste und -störungen durch Leitungen und ohne zusätzliche Verstärker verarbeitbar. Die Herstellung ist im gleichen Verfahrensschritt möglich.

Der Sensor kann auch durch eine in der Zeichnung nicht dargestellte Haube abgedeckt werden. Diese Haube wird ebenfalls aus Silizium oder einem in der thermischen Ausdehnung angepaßtem Glas (z.B. Pyrex) hergestellt. Der nun geschlossene Sensorraum kann völlig mit einer Flüssigkeit gefüllt werden. Dabei ist bei unterschiedlichen Ausdehnungskoeffizienten von Gehäuse (Silizium-Plättchen) und Flüssigkeit in bekannter Weise ein Ausdehnungsvolumen vorzusehen. Die von dem Pendel mitbewegte Flüssigkeit bewirkt eine weitere Erniedrigung der Resonanzfrequenz. Eventuell kann für Dämpfungszwecke auch eine Flüssigkeit höherer Viskosität, z.B. Silikonöl, ausgewählt werden. Die Haube ist aber in allen Fällen so auszubilden, daß sich die Pendel 12, 12a frei bewegen können und zwischen den Pendeln 12, 12a und der Haube keine die Schwingung negativ beeinflußende Grenzschichtreibung erzeugt wird. Neben der Dämpfung schützt die Haube den Sensor auch vor mechanischen Verletzungen.

Mit Hilfe des vom Sensor 11 abgegebenen Meßsignals können Insassenschutzvorrichtungen für Kraftfahrzeuge wie z.B. Gurtstraffer, Airbag, Warnblinkanlage, Überrollbügel ausgelöst werden. Die Insassenschutzvorrichtungen können gleichzeitig oder zeitlich gestaffelt aktiviert werden. Der Sensor ist aber auch bei anderen Fahrzeugen, wie z.B. Flugzeugen, verwendbar. Bei Flugzeugen kann es insbesondere notwendig sein, noch ein drittes Pendel in z-Richtung anzuordnen.

**Ansprüche**

1. Sensor zur selbsttätigen Auslösung von Insassenschutzvorrichtungen in Fahrzeugen, insbesondere Kraftfahrzeugen, der bei Abweichung von einer zulässigen Lage des Fahrzeugs ein Steuersignal abgibt und einen Träger (10) aus monokristallischem Material aufweist, dadurch gekennzeichnet, daß in den Träger (10) in wenigstens zwei Bewegungsrichtungen des Fahrzeugs je ein Pendel (12) eingeätzt ist, daß die Masse (13, 14) der Pendel (12) asymmetrisch ausgebildet ist, daß die Pendel (12) eine sehr tiefe Lage der Resonanzfrequenz aufweisen und daß die Lage der Pendel (12) mit Hilfe von auf den Torsionsstäben (15) in Form einer Wheatstone'schen Brücke angeordneten Widerständen (17 bis 20) bestimmt wird.

2. Sensor nach Anspruch 1, dadurch gekennzeichnet, daß die Masse der Pendel (12) in zwei sich geringfügig in der Masse unterscheidenden Drehmassen (13, 14) aufgeteilt ist.

3. Sensor nach Anspruch 1 und/oder 2, dadurch gekennzeichnet, daß die Widerstände (17 bis 20) in Schichttechnik aufgebracht sind.

4. Sensor nach einem der Ansprüche 1 bis 3, dadurch gekennzeichnet, daß der Träger (10) ein Silizium-Plättchen ist.

5. Sensor nach einem der Ansprüche 1 bis 4, dadurch gekennzeichnet, daß die Masse (13, 14) der Pendel (12) an einem Torsionsstab (15) elastisch befestigt ist und der Torsionsstab (15) eine geringe Rückstellkraft erzeugt.

6. Sensor nach einem der Ansprüche 1 bis 5, dadurch gekennzeichnet, daß die Auswerteelektronik des Sensors (11) auf dem Träger (10) angeordnet ist.

7. Sensor nach einem der Ansprüche 1 bis 6, dadurch gekennzeichnet, daß der Sensor (11) von einem Siliziumgehäuse abgeschlossen ist, das vollständig mit einem Dämpfungsmedium gefüllt ist.

8. Sensor nach einem der Ansprüche 1 bis 7, dadurch gekennzeichnet, daß die angeschlossene Insassenschutzvorrichtung ein Überrollbügel ist.

**Claims**

1. Sensor for the automatic triggering of passenger security devices in vehicles, in particular motor vehicles, which issues a control signal in the event of a deviation from an admissible position of the vehicle and has a carrier (10) of monocrystal material, characterised in that in each case a pendulum (12) is etched into the carrier (10) in at least two movement directions of the vehicle, in that the mass (13, 14) of the pendulum (12) is of asymmetrical construction, in that the pendulums (12) have a very low position of the resonant frequency and in that the position of the pendulums (12) is determined with the aid of resistors (17 to 20) arranged on the torsion rods (15) in the form of a Wheatstone bridge.

2. Sensor according to Claim 1, characterised in that the mass of the pendulums (12) is divided up into two rotational masses (13, 14) which are slightly different from one another in mass.

3. Sensor according to Claim 1 and/or 2, characterised in that the resistors (17 to 20) are applied in film technology.

4. Sensor according to one of Claims 1 to 3, characterised in that the carrier (10) is a silicon chip.

5. Sensor according to one of Claims 1 to 4, characterised in that the mass (13, 14) of the pendulums (12) is elastically secured to a torsional rod (15) and the torsional rod (15) generates a small restoring force.

6. Sensor according to one of Claims 1 to 5, characterised in that the evaluation electronics of the sensor (11) is arranged on the carrier (10).

7. Sensor according to one of Claims 1 to 6, characterised in that the sensor (11) is sealed off by a silicon housing which is completely filled with a damping medium.

8. Sensor according to one of Claims 1 to 7, characterised in that the connected passenger security device is a roll bar.

**Revendications**

1. Capteur pour le déclenchement automatique de dispositifs de protection des passagers dans des véhicules, notamment des véhicules automobiles, capteur qui en cas d'écart, à partir d'une position admissible du véhicule, déclenche un signal de commande, et qui comporte un support (10) en un matériau monocristallin, capteur caractérisé en ce que dans le support (10) et dans au moins deux directions de déplacement du véhicule, est respectivement réalisé par attache chimique, un pendule (12), en ce que la masse (13, 14) de ce pendule (12) est asymétrique, en ce que les pendules (12) ont une fréquence de résonance très basse et en ce que la position des pendules (12) est déterminée à l'aide de résistances (17 à 20) disposées sous la forme de ponts de Wheatstone sur les barreaux de torsion (15).

2. Capteur selon la revendication 1, caractérisé en ce que la masse du pendule (12) est divisée en deux masses pivotantes (13, 14) légèrement différentes.

3. Capteur selon la revendication 1 et/ou la revendication 2, caractérisé en ce que les résistances (17 à 20) sont rapportées selon la technique des couches.

4. Capteur selon une des revendications 1 à 3, caractérisé en ce que le support (10) est une plaquette de silicium.

5. Capteur selon une des revendications 1 à 4, caractérisé en ce que la masse (13, 14) du pendule (12) est fixée élastiquement à un barreau de torsion (15) et en ce que ce barreau de torsion (15) exerce un effort de rappel réduit.

6. Capteur selon une des revendications 1 à 5, caractérisé en ce que l'électronique d'exploitation du capteur (11) est disposée sur le support (10).

7. Capteur selon une des revendications 1 à 6, caractérisé en ce que ce capteur (11) est enfermé dans un boîtier en silicium qui est complètement rempli d'un fluide d'amortissement.

8. Capteur selon une des revendications 1 à 7, caractérisé en ce que le dispositif de protection des passagers raccordé est un arceau de sécurité.

FIG.1

FIG. 2